(19)

**Europäisches Patentamt**
**European Patent Office**
**Office européen des brevets**

(11) **EP 2 850 904 B1**

(12) **EUROPEAN PATENT SPECIFICATION**

(45) Date of publication and mention
of the grant of the patent:
**31.07.2019 Bulletin 2019/31**

(51) Int Cl.:
***H04W 72/14*** (2009.01)

(21) Application number: **12876920.5**

(86) International application number:
**PCT/SE2012/050506**

(22) Date of filing: **14.05.2012**

(87) International publication number:
**WO 2013/172747 (21.11.2013 Gazette 2013/47)**

(54) **UPLINK SCHEDULING IN A RADIO SYSTEM**

AUFWÄRTSSTRECKEN-ABLAUFPLANUNG IN EINEM FUNKSYSTEM

PLANIFICATION DE LIAISON MONTANTE DANS UN SYSTÈME RADIO

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.03.2015 Bulletin 2015/13**

(73) Proprietor: **Telefonaktiebolaget LM Ericsson
(publ)
164 83 Stockholm (SE)**

(72) Inventors:
• **LAU, Katrina**
  **Wallsend NSW 2287 (AU)**
• **GOODWIN, Graham C.**
  **Newcastle 2300 (AU)**

(74) Representative: **Brann AB**
**P.O. Box 3690**
**Drottninggatan 27**
**103 59 Stockholm (SE)**

(56) References cited:
WO-A1-03/005751          WO-A1-03/005751
WO-A1-2011/071430        WO-A1-2011/071430
WO-A2-2004/006603        US-A1- 2003 012 143
US-A1- 2011 149 875      US-B1- 6 597 919

• **SHISENCHI: 'Post: Ericsson important
  optimization parameters' PART OF
  TELECOMSOURCE - THE SPECTRUM OF
  KNOWLEDGE - FORUM 02 October 2012,
  XP055162664 Retrieved from the Internet:
  <URL:http://www.telecomsource.net/showthrea
  d.php?1019-Ericsson-
  Important-Optimization-Parameters> [retrieved
  on 2013-04-23]**

EP 2 850 904 B1

**Description**

TECHNICAL FIELD

The present invention relates to methods and devices for scheduling in a radio system. In particular the invention relates to methods and devices for uplink scheduling in a radio system.

BACKGROUND

In radio networks there typically exists a controller functionality to control different transmissions within the cellular radio network and over an air interface to/from a mobile station connected to the radio network. One such controller functionality is the scheduler function for scheduling transmission in the uplink, i.e. transmissions from a user equipment (UE) to a network node over an air-interface. In case the uplink used is the enhanced uplink (EUL) in a cellular radio network, the scheduler schedules EUL traffic of multiple users. EUL serves as a counterpart to the high speed downlink packed access (HSDPA) service in the Wideband Code Division Multiple Access (WCDMA) downlink.

Together, EUL and HSDPA provide the backbone for the mobile broadband offer for the WCDMA cellular system. The scheduler operates in a closed loop fashion, where transmission grants (control signals) are issued in response to transmission requests and air interface load (measurements). The third generation partnership project, 3GPP, standard provides channels with certain associated capacity, range and delay properties. Notably, the control loop is dynamic, with nonlinear constraints and plenty of discrete ranges of various states.

In this context the load on the uplink is of central importance. The task of the scheduler is to schedule as much traffic as possible, at the same time as the uplink coverage and stability needs to be maintained. In case a too large amount of traffic is scheduled on the uplink, the interference from other terminals can make it impossible for terminals at the cell edge to maintain communication - the coverage of the cell becomes too low. The cell may also become unstable in case too much traffic is scheduled. In order to avoid these two problems the scheduler schedules traffic under the constraint that the air interface load is held below a specific value. The load of a cell can be expressed as the fraction of the own cell uplink power, and the total uplink interference. This fraction can be termed the load factor. The total uplink interference consists of the sum of the own cell power, the neighbor cell interference and the thermal noise floor.

A key problem faced by the scheduler is grant underutilization. This occurs e.g. when a user does not fully utilize its allocated grant due to power or data constraints. This leads to underutilization of the available air interface as the resulting load is less than the available load. In order to counteract the effect of grant underutilization current schedulers use so-called overbooking. Overbooking means that the scheduler schedules (books) more than the available load. The aim of the overbooking is to increase the utilized load, see also WO2004006603 Other examples can be found in patent documents WO03/005751 and WO2011/071430.

*Enhanced uplink in WCDMA*

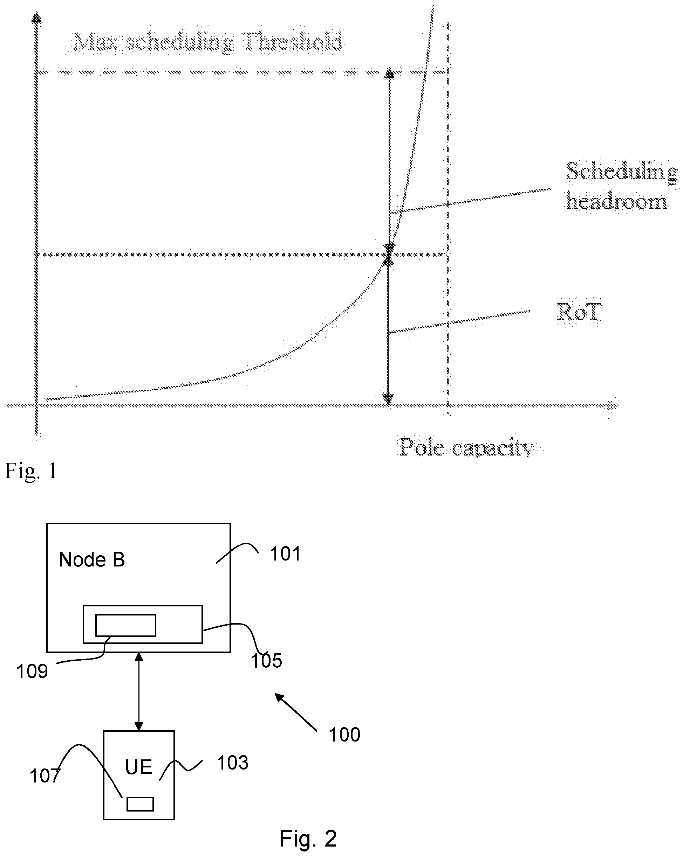

The WCDMA enhanced uplink aims at scheduling traffic to times when the uplink interference situation is favorable, thereby utilizing air interface resources in a better way than before. The air interface load is measured by the noise rise, over the thermal level, a quantity denoted rise over thermal (RoT). This is illustrated in Fig. 1, which illustrates the air interface load. In Fig. 1, the pole capacity is the limiting theoretical bit rate of the uplink, corresponding to an infinite noise rise,

The uplink data channel is denoted E-DCH Dedicated Physical Data Channel (E-DPDCH). This channel supports a high rate. It is however not involved in the scheduling control as such; this is the task of the corresponding control channel, denoted E-DCH Dedicated Physical Control Channel (E-DPCCH). This channel e.g. carries rate requests (measurement signals) from the User Equipments (UEs) to the EUL scheduler. There are also some downlink channels supporting EUL. The first of these is the Absolute Grant Channel (E-AGCH) which carries absolute grants (control signals) to each UE. Another control channel is the Relative Grant Channel (E-RGCH) which carries relative grants (also control signals) from the radio base station node B to the UE. Finally, the E-DCH HARQ Acknowledgement Indicator Channel (E-HICH) carries ACK/NACK information.

The grants mentioned above are the quantities signaled to the UE indicating what rate (power) it may use for its transmission. The UE can, but need not, use its complete grant. Relative grants are used to control the interference in neighbor cells - these can only decrease the current grant of the UE one step. It is to be noted that there are only a discrete number of grant levels that can be used.

The EUL is further described in E. Dahlman, S. Parkvall, J. Sköld and P. Beming. 3G Evolution - HSPA and LTE for Mobile Broadband, Oxford, UK. 2007.

*Scheduling in enhanced uplink*

The task of the scheduler is to schedule EUL user traffic, to enhance user and cell capacity. In addition the scheduler typically should:

- Keep track of the air interface cell load, and perform scheduling so as to maintain cell stability and coverage. Keep track of other available traffic, like transport resources and hardware.
- Receive, measure and estimate quantities relevant for its scheduling operation.
- Transmits orders to UEs, primarily in the form of granted power/bitrates.

When performing the above tasks, the scheduler needs to operate within the constraints induced by the 3GPP standard, these constraints typically being e.g.:

- Limited grant transmission capacity.
- Grant transmission delays.
- Grant step up rate limitations.
- Quantization of grant commands and measured signals.
- Standard limited UE status information.
- Extensive use of coarsely quantized information.

In existing schedulers UEs are e.g. given the maximum rate as long as there are resources available, in an order defined by a priority list. Then, in case of lack of resources, overload handling is invoked. This overload handling reduces the priority of the UE with the best grant to a very low priority, thereby resulting in switching in case of conflicting high rate users. Since there is a dead time until re-scheduling takes effect, this results in a loss of capacity. Other aspects include the fact that scheduling is based solely on air interface load taking effect, i.e. previous scheduling commands for other UEs are not used for prediction of air interface load, a fact that causes further losses.

*UEs in EUL scheduling*

The UEs form an integral part of the scheduling control loop. In this case it is not the data transfer on the E-DPDCH channel that is of interest; rather it is the operation of the UE according to the 3GPP standard that is the focal point. The UE performs e.g. the following tasks

- Reception of absolute grants on the E-AGCH channel (control signal). There are 4 of these channels, however only one absolute grant can be transmitted per TTI on each channel. Hence queues are used, which result in time varying delays.
- Reception of relative grants on the E-RGCH channel (control signal). The relative grants can only reduce the scheduled grant of the UE by 1 step.
- Formation of the scheduled grant of the UE, from the absolute and relative grants. The scheduled grant is the actual grant used by the UE for transmission.
- Using the absolute grants and the relative grants, for computation of the power to be used for data transmission. This is expressed using beta factors that are computed as nonlinear functions of the scheduled grant, accounting also for the absolute output power level of the UE. There is a delay associated with this process, from the reception of absolute and relative grants, until the beta factor is utilized for transmission.
- Transmission of user data, in accordance with the computed beta factor.
- Determination and signaling of the happy bit (measurement signal) to the scheduler of the RBS. If not happy the UE requests a higher bit rate.
- Determination and signaling of scheduled information (measurement signal) to the scheduler of the RBS. The scheduled information is based on the amount of data in the RLC buffer, which allows the scheduler to make scheduling decisions for the UE.
- Determination and signaling of the transport format used (E-TFCI). This carries e.g. the actual beta factor applied by the UE, thereby supporting the load estimator that provides the scheduler with information of the current air-interface load.

UEs are divided into different categories depending on whether they support 10 ms Transmission Time Intervals, TTIs, (TTI is roughly the scheduling sampling period) only, or also 2 ms TTIs. Their maximal bit rates also affect the category of the UEs. The details appear in Table 1,

| E-DCH category | Minimum SF | Support for 2 ms TTI | Peak Data Rate, 10 ms TTI | Peak Data Rate, 2 ms TTI |
|---|---|---|---|---|
| Category 1 | 1×SF4 | - | 0.73 Mbit/s | - |
| Category 2 | 2×SF4 | Y | 1.46 Mbit/s | 1.46 Mbit/s |
| Category 3 | 2×SF4 | - | 1.46 Mbit/s | - |
| Category 4 | 2×SF2 | Y | 2 Mbit/s | 2.9 Mbit/s |
| Category 5 | 2×SF2 | - | 2 Mbit/s | - |
| Category 6 | 2×SF4+ 2×SF2 | Y | 2 Mbit/s | 5.76 Mbit/s |

Table 1: UE categories in EUL.

While the existing technology for scheduling has been proven useful, there is also a constant desire to improve the performance in cellular radio systems. Hence, there exists a need to provide an improved method and device for scheduling in a cellular radio system.

SUMMARY

It is an object of the present invention to provide improved methods and devices to address the problems as outlined above.

This object and others are obtained by the methods and devices as described herein and set out in the attached independent claims. Advantageous embodiments are set out in the attached dependent claims.

As has been realized by the inventors, existing overbooking approaches include the following:

- Overbooking is only performed for users on the minimum grant level.

- Overbooking is not performed in a systematic or optimal manner.

- The probability of grant utilization is not taken into account.

By providing an overbooking scheme which addresses at least parts of the above problems by taking into account the grant utilization probabilities of the users to optimize the level of overbooking for a given risk of overload an improved overbooking mechanism can be achieved.

In accordance with some embodiments the level of overbooking is set in relation to a given risk of overload. This can typically be done by taking into account the grant utilization probability for each user. Thus, in methods and devices for scheduling overbooked uplink transmissions for a set of user equipments to a radio base station in a radio network, the overbooking can, at least partly, be based on grant utilization probabilities of the set of user equipments. In accordance with some embodiments overbooking is done for a set of users. Scheduling is done with more than the available load, and then relying on the fact that, at any one time, it is unlikely that all of the users will use their allocation by basing the overbooked scheduling on grant utilization probabilities of the set of user equipments.

Different methods to achieve this goal can be used. In a first exemplary method, the total number of scheduled users is kept constant but the grant for each of the users is adjusted as the utilization probability varies with time. In a second exemplary method, the grant for each of the users is kept constant but the total number of scheduled users is adjusted as the utilization probability varies with time. The methods can also be extended to the case in which the users do not have equal grants.

Thus, in accordance with some embodiments a method of scheduling uplink transmissions for a set of user equipments to a radio base station in a radio network is provided. The scheduling involves overbooking uplink transmissions up to a level above the available load on the air interface between the user equipments and the radio base station. The method comprises the step of determining a level of overbooking at least partly based on grant utilization probabilities of the set of user equipments.

In accordance with some embodiments the level of overbooking is set in relation to a given risk of overload of the air interface.

In accordance with some embodiments the total number of scheduled user equipments is kept constant and the grant for each user equipment is adjusted in response to an updated utilization probability.

In accordance with some embodiments the grant for each user equipment is kept constant and the total number of scheduled users is adjusted in response to an updated is adjusted utilization probability.

The invention also extends to a scheduler adapted to perform in accordance with the above. The scheduler can typically be implemented in a module comprising a micro controller or a micro processor operating on a set of computer program instructions stored in a memory, which instructions when executed by the module causes the module to perform scheduling in accordance with the methods as described herein. In accordance with some embodiments the scheduler is associated with or integrated in a node of a cellular radio system. The node can for example be a radio base station, Node B, or a central node such as a radio network controller (RNC).

BRIEF DESCRIPTION OF THE DRAWINGS

The present invention will now be described in more detail by way of non-limiting examples with reference to the accompanying drawings, in which:

- Fig. 1 is a diagram illustrating air interface load,
- Fig. 2 is a general view of a CDMA radio system,
- Fig. 3 is a diagram illustrating a grant probability and a corresponding cumulative distribution,
- Figs. 4 - 14 illustrate different simulation results, and
- Fig. 15 is a flow chart illustrating different steps performed when scheduling uplink data.

DETAILED DESCRIPTION

In the following description, for purposes of explanation and not limitation, specific details are set forth such as particular architectures, interfaces, techniques, etc. However, it will be apparent to those skilled in the art that the described technology may be practiced in other embodiments that depart from these specific details. That is, those skilled in the art will be able to devise various arrangements which, although not explicitly described or shown herein, embody the principles of the described technology. In some instances, detailed descriptions of well-known devices, circuits, and methods are omitted so as not to obscure the description of the present invention with unnecessary detail. All statements herein reciting principles, aspects, and embodiments, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that block diagrams herein represent conceptual views of illustrative circuitry embodying the principles of the technology. Similarly, it will be appreciated various processes described may be substantially represented in a computer-readable medium and can be executed by a computer or processor.

The functions of the various elements including functional may be provided through the use of dedicated hardware as well as hardware capable of executing software. When a computer processor is used, the functions may be provided by a single dedicated processor, by a single shared processor, or by a plurality of individual processors, some of which may be shared or distributed. Moreover, a controller as described herein may include, without limitation, digital signal processor (DSP) hardware, ASIC hardware, read only memory (ROM), random access memory (RAM), and/or other storage media.

In Fig. 2 a general view of a cellular radio system 100 is depicted. The system can for example be a WCDMA system, but the below description can be applied to any CDMA system. The system comprises a number of radio base stations 101, here denoted NodeBs. A mobile station 103, here denoted User Equipment UE, that is in a geographical area covered by the radio base station can connect to the radio base station over an air-interface. The base station 101 and the mobile station 103 can further comprise modules, here generally denoted 105 and 107, respectively for performing different tasks performed with these entities. In this exemplary embodiment the base station 101 further comprises a scheduler 109. The scheduler can be arranged to schedule data transmission in the uplink for the UE in accordance with any of the methods described herein. The scheduler 109 can for example be implemented using a microcontroller operating on a set of computer software instructions stored on a memory associated with the scheduler 109. Also it to be noted that the scheduler can be located in another location than in the base station 101. The functions of the various hardware comprising components such as processors or controllers can be provided through the use of dedicated hardware as well as hardware capable of executing software. When provided by a processor, the functions may be provided by a single dedicated processor, by a single shared processor, or by a plurality of individual processors, some of which may be shared or distributed. Moreover, a processor or controller may include, without limitation, digital signal processor (DSP) hardware, ASIC hardware, read only memory (ROM), random access memory (RAM), and/or other storage media.

Other configurations of the radio base station are also envisaged. For example the functions provided by the radio base station can be distributed to other modules than the entities 105 and 109.

**Overbooking with a Specified Number of Users**

Suppose that a certain load $L_{avail}$ is to be distributed amongst a number of $n$ users who each have a grant utilization probability of $P$. The probability that $k$ grants are used is given by the binomial distribution

$$b(k|n,P) = \frac{n!}{k!\,(n-k)!} P^k (1-P)^{n-k}.$$

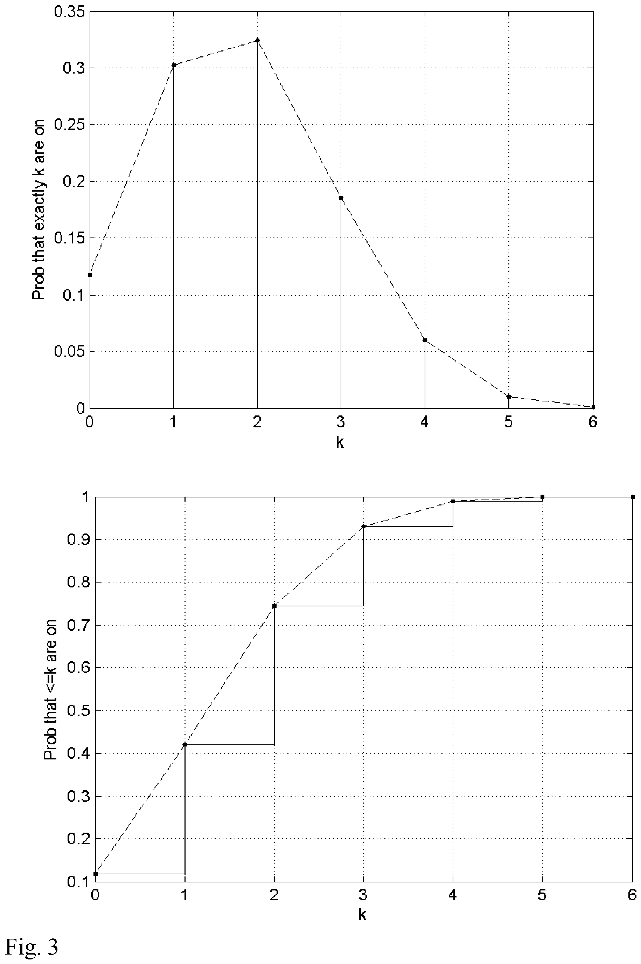

This is illustrated in Fig. 3 (top) for the example of $P$=0.3 and $n$=6. The corresponding cumulative distribution, which is denoted by $f_b\,(k|n,P)$, is shown at the bottom of Fig. 3. The distribution has a 'staircase' shape due to the fact that the underlying probability distribution is discrete (i.e., only defined for $k$=1,2,...).

For the case in which $n$ users are each allocated the same load, the following method maximizes the level of overbooking for a given level of risk.

**First exemplary overbooking method**

Suppose that n is specified. Let $1-P_{crit}$ denote the allowable (maximum) probability of overload. To each of the $n$ users allocate a load of

$$L_{eq} = \frac{L_{avail}}{n_{crit}},$$

where $n_{crit}$ is defined as the minimum value of $k$ for which the following inequality holds:

$$f_b(k|n,P) \geq P_{crit}.$$

That is $n_{crit}$ is the smallest value of k for which an allocation of $L_{avail}/k$ (to each of the n users) gives an overload probability which is less than or equal to 1-$P_{crit}$.

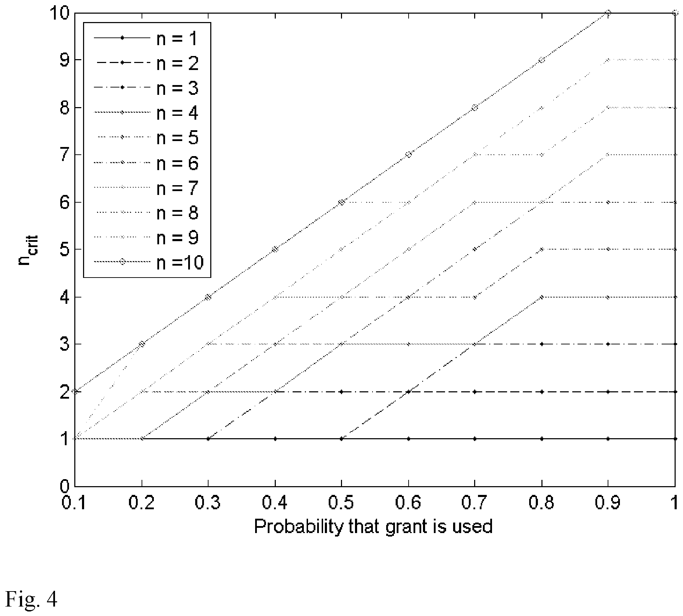

A graph of $n_{crit}$ as a function of $P$ for several values of $n$ is shown in Fig. 4.

It should be noted that following equation can be used to convert the allocated load to the user data individual power scale factors $\overline{\gamma}$:

$$\overline{\gamma} = f(L_{eq}) = \frac{L_{eq}/\overline{S}^* - 1 + L_{eq}(1-\overline{\alpha})}{1 - L_{eq}(1-\overline{\alpha})}, \qquad\qquad (1)$$

where $\overline{S}^*$ is the chip signal to noise ratio (linear scale) and $\overline{\alpha}$ is the self-interference factor.

The power scale factors are derived from tabulated parameters available in the relevant standard, e.g. 3GPP WCDMA standard. The grants are readily computable from these factors and are tabulated in document 25.213 of the 3GPP standard (http://www.3gpp.org/ftp/Specs/html-info/25213.htm).

Analysis

This overbooking method (described above) will now be analysed for the case of $P_{crit}$=0.75. In order to study the performance, the effect of congestion control needs to be considered. For the case in which $\leq n_{crit}$ users utilize their grants it is assumed that the load generated by the users is $kL_{eq}$. For the case in which $> n_{crit}$ users utilize their grants, the following three cases are considered:

1) No congestion control (overload permitted)
2) All users reduced to zero
3) Excess users reduced to zero (load clamped at $L_{avail}$)

Alternatives (1) and (2) will give an upper bound and a lower bound, respectively, for the achievable performance, whilst alternative (3) provides a more realistic (intermediate) indication of the performance. Alternatives (2) and (3) assume that some form of fast congestion control is available.

The mean load utilization and throughput for the above three cases will now be considered.

Results - No congestion control

In this case, it is assumed that the actual load is permitted to exceed $L_{avail}$ For this idealized case, it is also assumed that it is possible for all n users to utilize their grants. It is clear that for a single user, the mean load is $PL_{eq}$. It follows that if the Dedicated Physical Control Channel (DPCCH) load for the users who are not utilising their grants is neglected, then the mean load for all of the users is $nPL_{eq}$. The 'load utilization' (fraction of the available load which is utilized) is then given by:

$$\frac{nPL_{eq}}{L_{avail}} = \frac{nP}{n_{crit}}$$

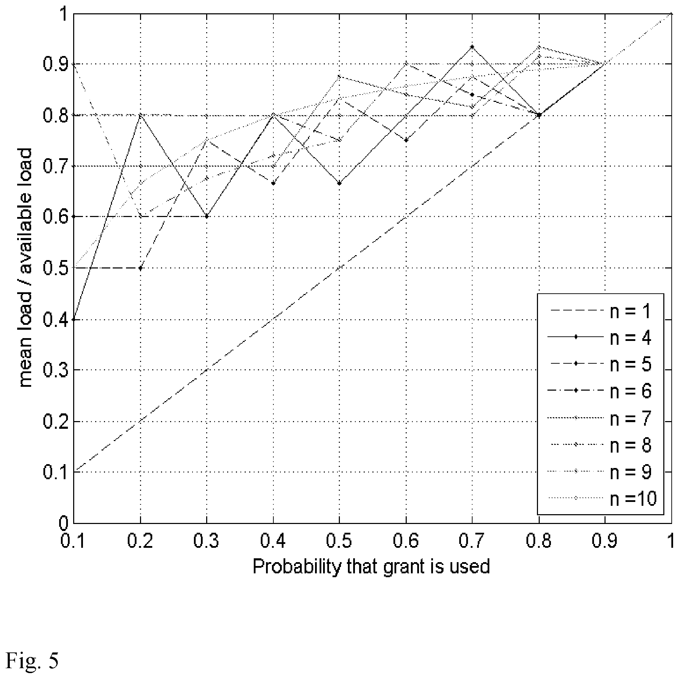

Fig. 5 shows the load utilization as a function of $P$ for several values of $n$. The blue dashed line ($n$=1) shows the utilization when the available load is allocated to a single user. In this case, the load utilization is given by $P$, and the resulting throughput is the maximum that can be achieved without performing overbooking. It can be seen that overbooking increases the load utilization in almost all of the cases considered and is never worse.

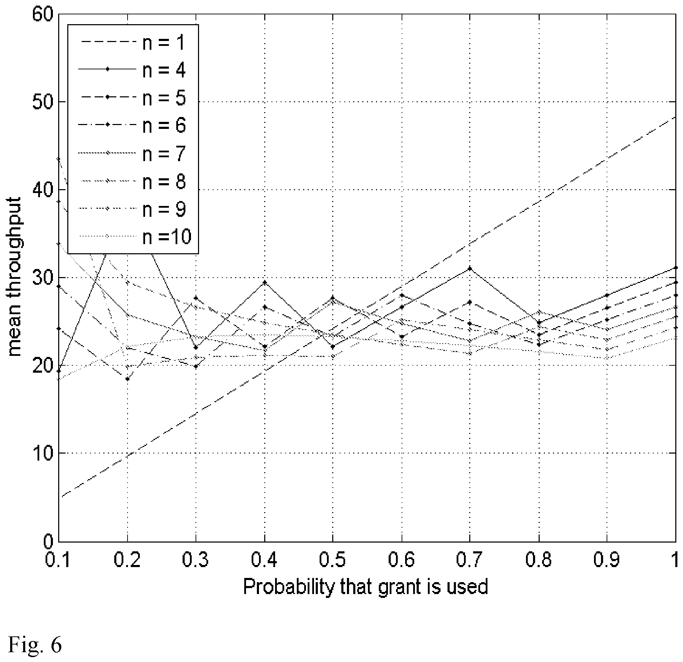

Fig. 6 shows the corresponding plots of the sum of the $\overline{\gamma}$s (which is assumed to be proportional to the mean throughput) when $L_{avail}$=0.5. These graphs were generated by plotting $Pn\overline{\gamma}$, where $\overline{\gamma}$ is given by Eq. (1) with $\overline{S}^* = 1/64$ and $\overline{\alpha} = 0.3$, for each value of $n$ and $P$. As mentioned above, the dashed line represents the maximum throughput without overbooking. It can be seen that throughput with overbooking is better than that for a single user at low probabilities (< approximately 0.5). Also, the mean throughput is relatively independent of $P$ and $n$. The high mean throughput at very low probabilities is due to the fact that the overbooking ratio at these probabilities is high. This implies that the worst case load is significantly greater than 1 and hence that the assumption of no congestion control does not hold.

Results - All users reduced to zero

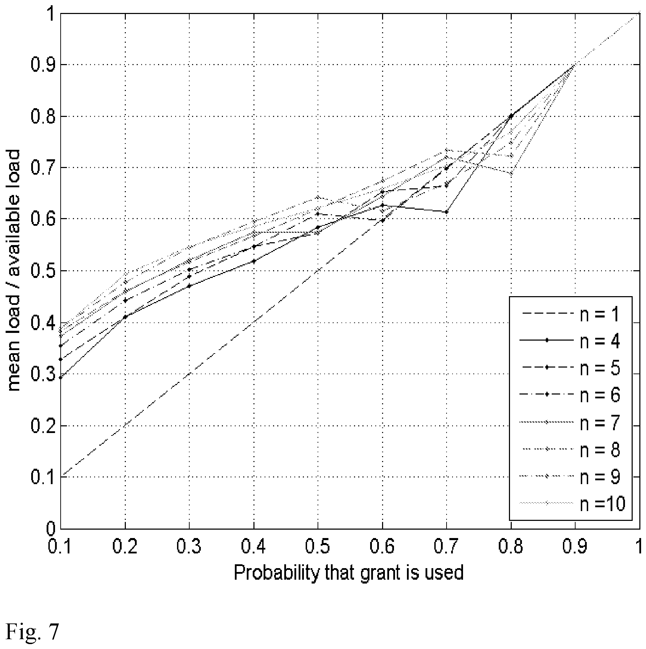

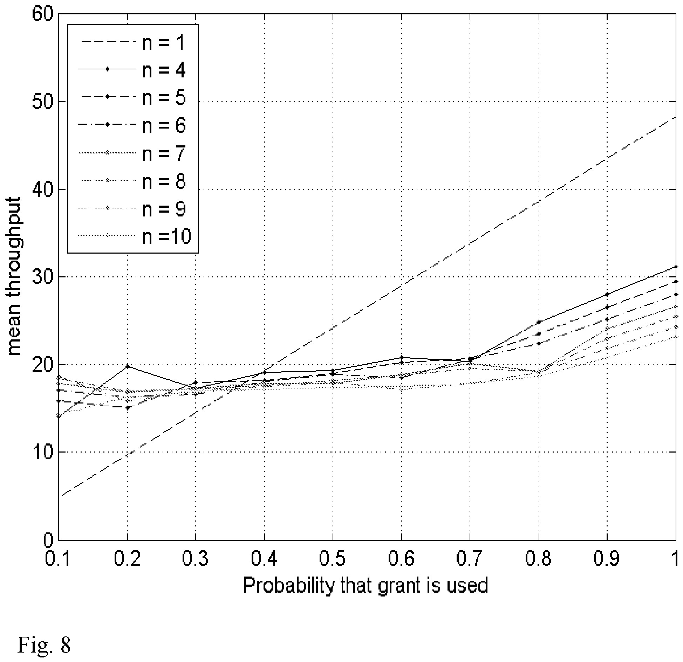

In this case, it is assumed that if $k>n_{crit}$, then the load for each of the $n$ users is reduced to zero. This provides a lower (pessimistic) bound on the load utilization and mean throughput. The results are shown in Figs. 7 and 8. It can be seen that the load utilization and mean throughput are significantly less than their counterparts in Figs. 5 and 6, respectively. However, they are still better than a single user at low probabilities.

Results - Excess users reduced to zero

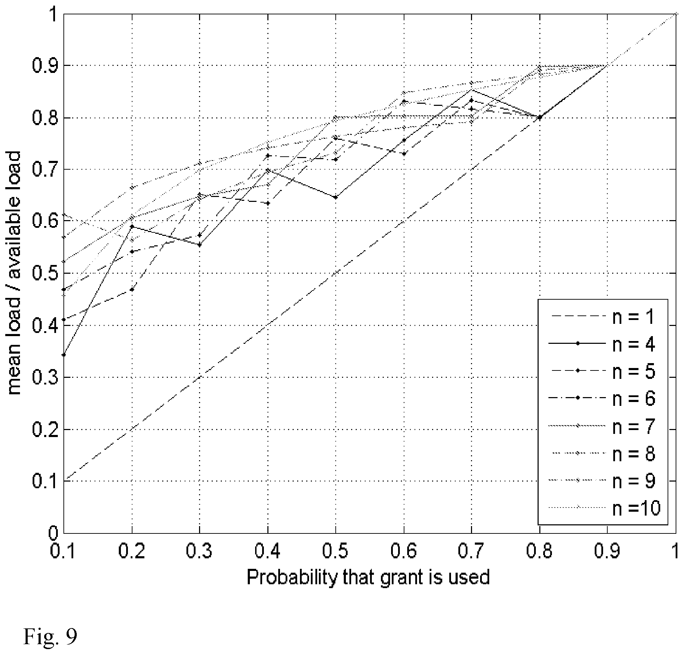

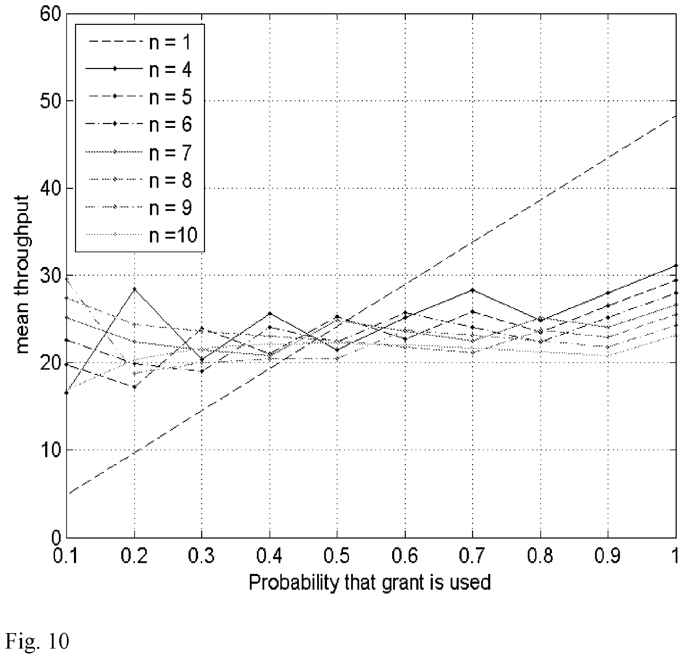

In this case, it is assumed that if $k>n_{crit}$, then the loads for $k$-$n_{crit}$ users are reduced to zero. Figs. 9 and 10 show the load utilization and mean throughput for this method of congestion control. The results are between those for the first two methods, and the mean throughput occupies a narrow band between approximately 20 and 30.

It should be noted that the results provided suggest that overbooking outperforms the single user case only for low grant utilization probabilities. However, this assumes that the utilization probability is independent of the allocated grant. If the utilization probability is lower for a higher grant, or if the UE capability is less than the available load, then overbooking may be advantageous even at higher utilization probabilities.

**Overbooking with a Specified Load Allocation**

The first exemplary overbooking embodiment involves keeping the number of scheduled users, $n$ constant and $n_{crit}$ is a function of the grant utilization probability. This corresponds to an overbooking strategy in which the total number of grants is kept constant and the allocation to each user $L_{eq}$ is changed as the grant utilization probability changes.

An alternative approach is to keep $n_{crit}$ constant and to select $n$ to maximize the level of overbooking for a given level of risk. Below an exemplary method involving such a step is described:

## Second exemplary overbooking method

Suppose that $n_{crit}$ (and hence $L_{eq}$) is specified. Let $1-P_{crit}$ denote the allowable (maximum) probability of overload. Let the total number of scheduled users be the maximum value of n which satisfies:

$$f_b(n_{crit}|n,P) \geq P_{crit} .$$

It is to be noted that the strategy to keep $n_{crit}$ constant and to select $n$ to maximize the level of overbooking for a given level of risk can be partially motivated by the observation that the throughput does not vary significantly with $n$. A potential advantage of this strategy is that it only requires the number of users to be changed, not the size of each grant. Hence if a mechanism, similar to that used for congestion control, can be used to provide fast control of the total number of users, then this strategy may outperform the previous one. It is also possible that this scheme may provide better control of the probability of overload if the grant quantization limits the effectiveness of the previous scheme.

For a given value of $n_{crit}$, n can be found by examining a graph of $n_{crit}$ as a function of $P$ for a range of values of $n$. For example, the graph in Fig. 4 can be used to find $n$ if $n \leq 10$. For $n_{crit}>2$, the horizontal line at $n_{crit}$ does not extend to the left of the plot (down to 0.1). This indicates that $n$ in this region is >10.

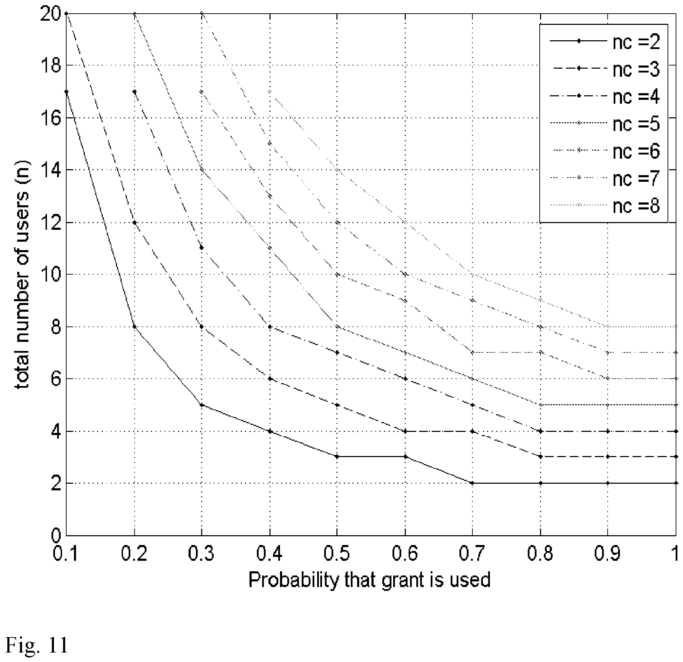

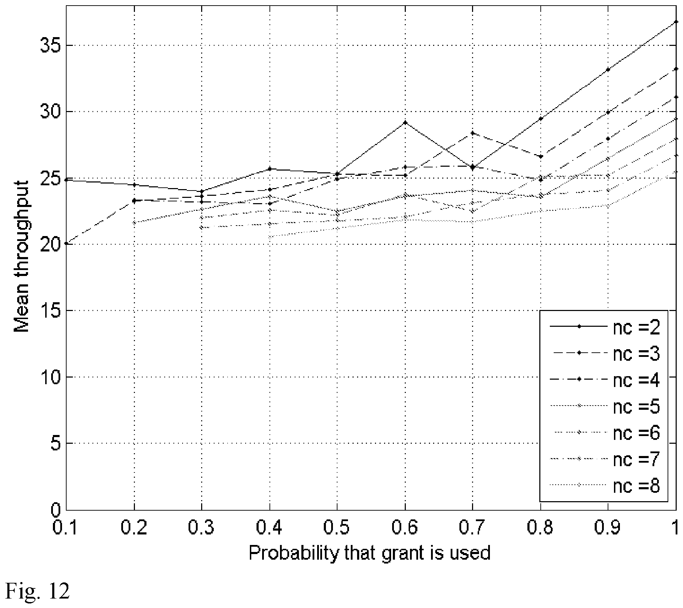

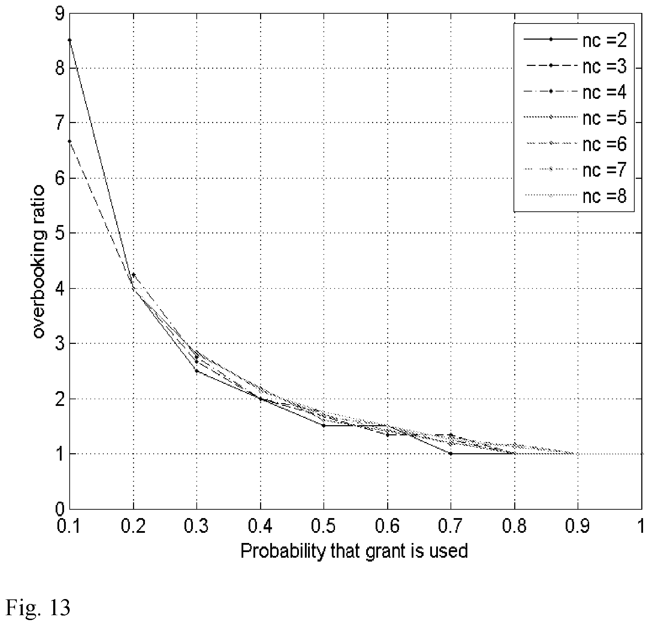

A graph of $n$ as a function of $P$ for several values of $n_{crit}$ is shown in Fig. 11. For this graph, a maximum $n$ of 20 was assumed. Fig. 12 shows the corresponding mean throughput values, and Fig. 13 shows the overbooking ratios (defined as $n/n_{crit}$). It can be seen that the mean throughput does not vary significantly with $n_{crit}$ Fig. 13 shows that the overbooking ratio is essentially independent of $n_{crit}$ (dependent only on $P$).

## Generalization to Unequal Load Allocations

The overbooking methods described herein can be generalized to the case of unequal load allocations. For the purpose of illustration, the case in which each user is allocated a normalized load of either 0.5 or 1 is discussed here. This is motivated by the observation that with equal load allocations, the selected value of $n_{crit}$ is quite conservative in some cases due to the limited number of points on the cumulative distribution. If normalized load allocations of 0.5 or 1 are allowed, then extra points at $k=1.5, 2.5,....$ are introduced. In some cases, this will lead to a less conservative value of $n_{crit}$

Let $\hat{L}_i$ denote the load for the $i$ the user normalized by $L_{eq}$ and let $\hat{\mathbf{L}}$ denote the vector of normalized loads $[\hat{L}_1, \hat{L}_2,...\hat{L}_n]$. The generalization of a method utilizing the overbooking method in accordance with the first exemplary embodiment involves replacing $f_b(k|n,P)$ by $f_b(k|\hat{\mathbf{L}},P)$, where $f_b(k|\hat{\mathbf{L}},P)$ is the probability that the total normalized load is $\leq k$. The generalization of a method utilizing the overbooking method in accordance with the second exemplary embodiment involves replacing $f_b(k|n,P)$ by $f_b(k|\hat{\mathbf{L}},P)$ and then maximizing the sum of the $\hat{L}_i$'s over a set of vectors $\hat{\mathbf{L}}$.

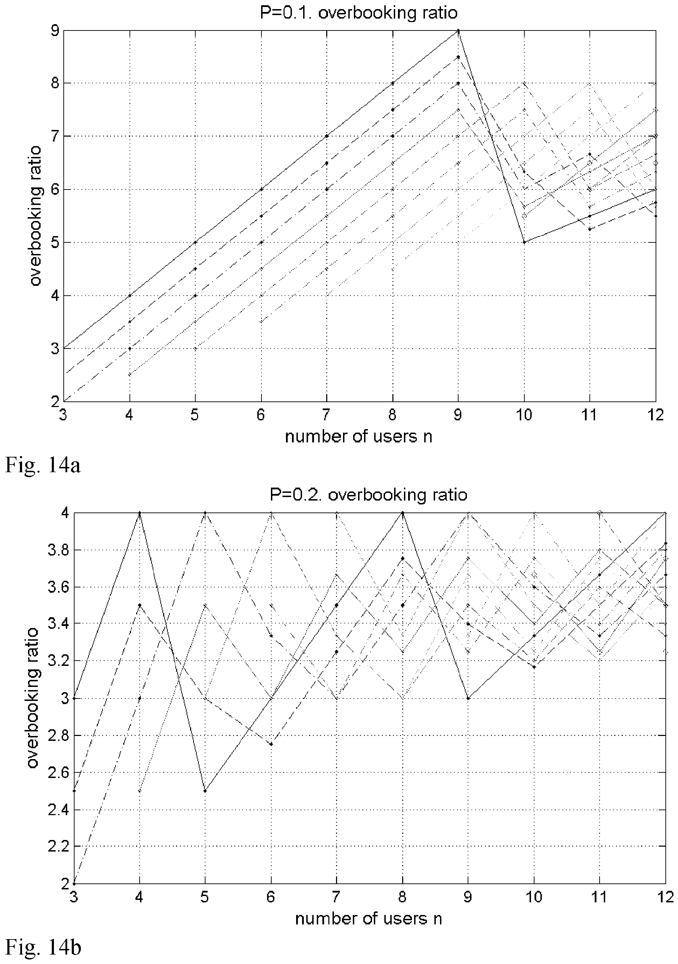

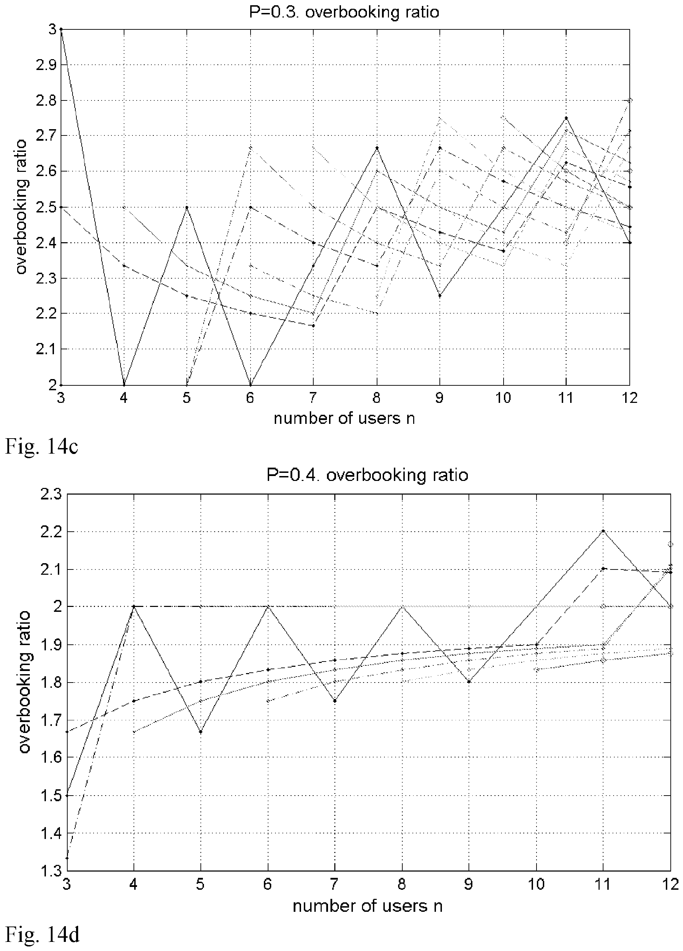

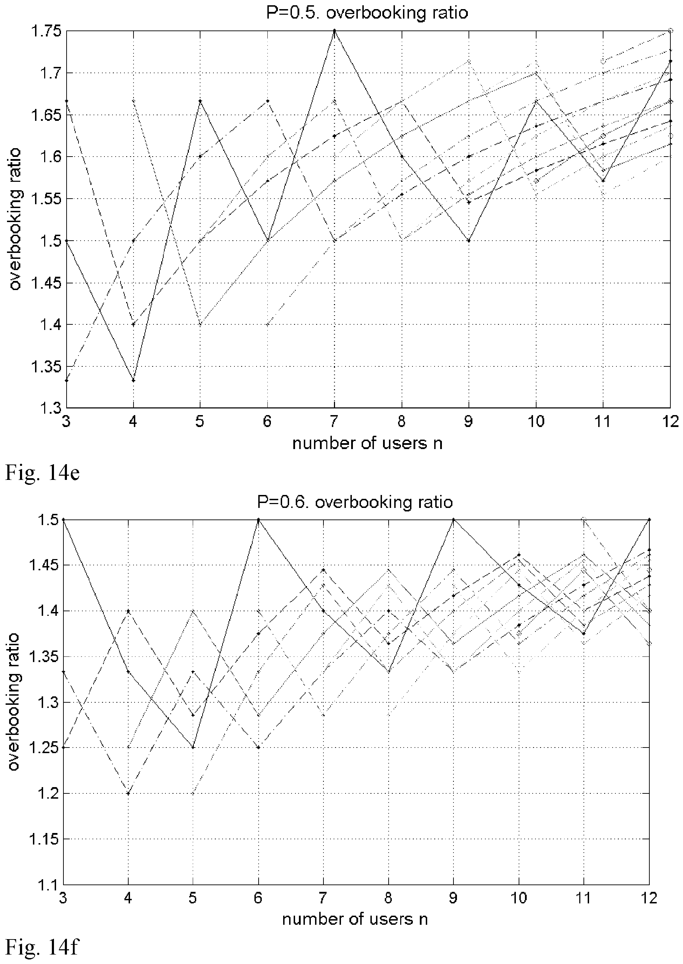

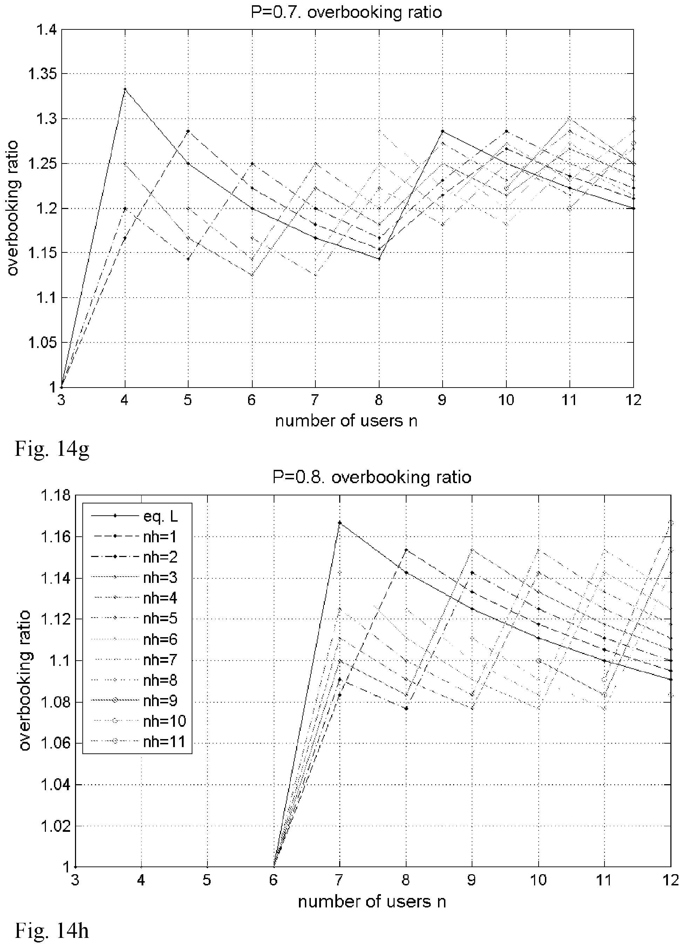

Figs. 14a - 14h shows the overbooking ratios for the case in which normalized load allocations of 0.5 or 1 are permitted. Results for $n=3,4,...,12$, $P=0.1,0.2,...,0.8$, and $P_{crit} = 0.75$ are shown. For each value of n, results are provided for $n_h = 1, 2, ... n$ -1, where $n_h$ is the number of users with a normalized load of 0.5. The case in which all of the loads are equal corresponds to $n_h = 1$. It can be seen that the use of unequal loads does not significantly increase the maximum achievable overbooking ratio. However, for a specified value of $n$ the achievable performance with unequal loads may be better than the performance with equal loads.

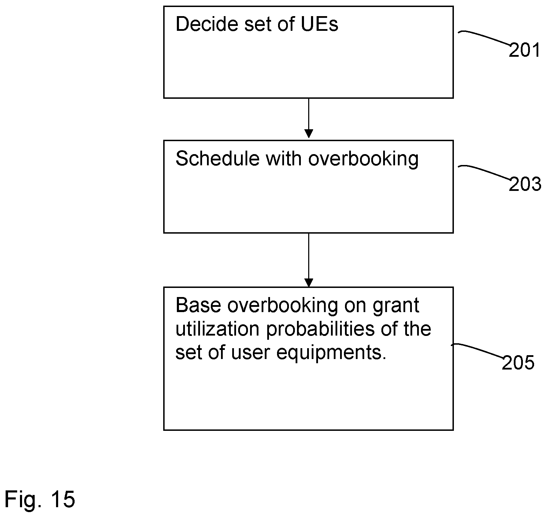

Fig. 15 is a flowchart illustrating some steps performed in a scheduler when scheduling uplink transmission in a radio system. First in a step 201 a set of user equipments are scheduled for uplink transmission. Next in a step 203 the scheduling is set to involve overbooking. Then in a step 205 the level of overbooking is determined, at least partly, based on grant utilization probabilities of the set of user equipments. As set out above, the level of overbooking can be set in relation to a given risk of overload of the air interface. In accordance with one embodiment the scheduler can be adapted to keep the total number of scheduled user equipments constant and to adjust the grant for each user equipment in response to an updated utilization probability. In an alternative embodiment the scheduler can be adapted to keep the grant for each user equipment constant and to adjust the total number of scheduled users in response to an updated is adjusted utilization probability. In accordance with some embodiments the user equipments are given unequal grants.

Using the methods and devices as described herein can provide many advantages compared to existing solutions. For example the utilization of the available air interface resources in the uplink can be improved, thereby increasing the cell throughput. Also the described method and devices can be configured to coexist with present radio base station functionality, thereby enabling relatively easy integration. Also, they can have a low computational complexity, avoiding the use of scarce hardware resources.

**Claims**

1.  A method of scheduling uplink transmissions for a set of user equipments to a radio base station (101) in a radio network (100), wherein the scheduling involves overbooking (203) the uplink transmissions up to a level above an available load on an air interface between the set of user equipments and the radio base station (101), the method comprising steps of:

    determining a probability based on a number of user equipments, n, in the set of user equipments, a number of grants, k, and a grant utilization probability, P, for each of the n user equipments (103), wherein the probability is a probability that the k number of grants are used, and wherein the probability is given by a binomial distribution:

    $$b(k|n, P) = \frac{n!}{k!(n-k)!} P^k (1 - P)^{(n-k)};$$

    determining a maximum allowable probability of overload, (1-P$_{crit}$), for a specified number of user equipments (103), n; and
    assigning, to each of the specified number of user equipments (103), n, a load, L$_{eq}$, wherein the load, L$_{eq}$, is given by $L_{eq} = \frac{L_{avail}}{n_{crit}}$, $L_{eq}$ wherein L$_{avail}$ is a load that is to be distributed amongst the specified number of user equipments (103), n, and wherein n$_{crit}$ is defined as a minimum value of k for which the inequality $f_b (k|n, P)$ $\geq P_{crit}$ holds, wherein fb (k I n, P) is the corresponding cumulative distribution of the binomial distribution.

2.  The method according to claim 1, wherein the level of the overbooking is set in relation to a given risk of the overload of the air interface.

3.  A method of scheduling uplink transmissions for a set of user equipments to a radio base station (101) in a radio network (100), wherein the scheduling involves overbooking (203) the uplink transmissions up to a level above an available load on an air interface between the set of user equipments and the radio base station (101), the method comprising steps of:

    determining a probability based on a number of user equipments, n, in the set of user equipments, a number of grants, k, and a grant utilization probability, P, for each of the n user equipments (103), wherein the probability is a probability that the k number of grants are used, and wherein the probability is given by a binomial distribution:

    $$b(k|n, P) = \frac{n!}{k!(n-k)!} P^k (1 - P)^{(n-k)};$$

    determining a maximum allowable probability of overload, (1-P$_{crit}$), for a specified number of user equipments (103), n; and
    determining a number of scheduled user equipments, wherein the number of scheduled user equipments is a maximum value of n that satisfies $f_b (n_{crit}|n, P) \geq P_{crit}$, and wherein n$_{crit}$ is a constant, wherein fb (k I n, P) is the corresponding cumulative distribution of the binomial distribution.

4.  The method according to claim 3, wherein the number of scheduled user equipments is determined in relation to a given risk of the overload of the air interface.

5.  The method according to any of claims 3-4, wherein each of the scheduled user equipments is scheduled with equal or unequal load allocations.

6.  A scheduler (109) for scheduling uplink transmissions for a set of user equipments to a radio base station (101) in a radio network (100), wherein the scheduler (109) is adapted to overbook the uplink transmissions up to a level above an available load on an air interface between the set of user equipments and the radio base station (101) when scheduling the uplink transmissions, the scheduler (109) being adapted to:

determine a probability based on a number of user equipments, n, in the set of user equipments, a number of grants, k, and a grant utilization probability, P, for each of the n user equipments (103), wherein the probability is a probability that the k number of grants are used, and wherein the probability is given by a binomial distribution:

$$b(k|n,P) = \frac{n!}{k!(n-k)!} P^k (1-P)^{(n-k)};$$

determine a maximum allowable probability of overload, $(1-P_{crit})$, for a specified number of user equipments (103), n; and
assign, to each of the specified number of user equipments (103), n, a load, $L_{eq}$, wherein the load, $L_{eq}$, is given by $L_{eq} = \frac{L_{avail}}{n_{crit}}$, wherein $L_{avail}$ is a load that is to be distributed amongst the specified number of user equipments (103), n, and wherein $n_{crit}$ is defined as a minimum value of k for which the inequality $f_b(k|n,P) \geq P_{crit}$ holds, wherein fb (k I n, P) is the corresponding cumulative distribution of the binomial distribution.

7. The scheduler (109) according to claim 6, wherein the scheduler (109) is further adapted to set the level of overbooking in relation to a given risk of the overload of the air interface.

8. A scheduler (109) for scheduling uplink transmissions for a set of user equipments to a radio base station (101) in a radio network (100), wherein the scheduler (109) is adapted to overbook the uplink transmissions up to a level above an available load on an air interface between the set of user equipments and the radio base station (101) when scheduling the uplink transmissions, the scheduler (109) being adapted to:

determine a probability based on a number of user equipments, n, in the set of user equipments, a number of grants, k, and a grant utilization probability, P, for each of the n user equipments (103), wherein the probability is a probability that the k number of grants are used, and wherein the probability is given by a binomial distribution:

$$b(k|n,P) = \frac{n!}{k!(n-k)!} P^k (1-P)^{(n-k)};$$

determine a maximum allowable probability of overload, $(1-P_{crit})$, for a specified number of user equipments (103), n; and
determine a number of scheduled user equipments, wherein the number of scheduled user equipments is a maximum value of n that satisfies $f_b(n_{crit}|n,P) \geq P_{crit}$, and wherein $n_{crit}$ is a constant, wherein fb (k I n, P) is the corresponding cumulative distribution of the binomial distribution.

9. The scheduler (109) according to claim 8, wherein the scheduler (109) is further adapted to schedule each of the scheduled user equipments with equal or unequal load allocations.

10. A node (101) of a cellular radio system (100), wherein the node (101) comprises a scheduler (109) according to claim 6.

11. The node (101) according to claim 10, wherein the node (101) is a radio base station.

12. A node (101) of a cellular radio system (100), wherein the node (101) comprises a scheduler (109) according to claim 8.

13. The node (101) according to claim 12, wherein the node (101) is a radio base station.

**Patentansprüche**

1. Verfahren zur Ablaufplanung von Aufwärtsstreckenübertragungen für einen Satz an Benutzergeräten an eine Funkbasisstation (101) in einem Funknetzwerk (100), wobei die Ablaufplanung das Überbuchen (203) der Aufwärtsstreckenübertragungen bis zu einem Grad über einer verfügbaren Last an einer Luftschnittstelle zwischen dem Satz an Benutzergeräten und der Funkbasisstation (101) beinhaltet, wobei das Verfahren die folgenden Schritte umfasst:

Bestimmen einer Wahrscheinlichkeit auf Grundlage einer Anzahl an Benutzergeräten, n, in dem Satz an Benutzergeräten, einer Anzahl an Gewährungen, k, und einer Gewährungsnutzungswahrscheinlichkeit, P, für jedes der n Benutzergeräte (103), wobei die Wahrscheinlichkeit eine Wahrscheinlichkeit ist, dass die k Anzahl an Gewährungen genutzt wird, und wobei die Wahrscheinlichkeit durch eine Binominalverteilung gegeben ist:

$$b(k|n, P) = \frac{n!}{k!(n-k)!} P^k (1 - P)^{(n-k)};$$

Bestimmen einer maximal zulässigen Wahrscheinlichkeit an Überladung, (1-$P_{crit}$), für eine spezifizierte Anzahl an Benutzergeräten (103), n; und

Zuweisen einer Last, $L_{eq}$, an jedes aus der spezifizierten Anzahl an Benutzergeräten (103), n, wobei die Last, $L_{eq}$, durch $L_{eq} = \frac{L_{avail}}{n_{crit}}$ gegeben ist, wobei $L_{avail}$ eine Last ist, die unter der spezifizierten Anzahl an Benutzergeräten (103), n, zu verteilen ist, und wobei $n_{crit}$ als ein Mindestwert von k definiert ist, für den die Ungleichheit $f_b(k|n,P) \geq P_{crit}$ gilt, wobei **fb (k I n, P)** die entsprechende kumulative Verteilung der Binominalverteilung ist.

2. Verfahren nach Anspruch 1, wobei der Grad der Überbuchung in Relation zu einem gegebenen Risiko der Überladung der Luftschnittstelle festgelegt wird.

3. Verfahren zur Ablaufplanung von Aufwärtsstreckenübertragungen für einen Satz an Benutzergeräten an eine Funkbasisstation (101) in einem Funknetzwerk (100), wobei die Ablaufplanung das Überbuchen (203) der Aufwärtsstreckenübertragungen bis zu einem Grad über einer verfügbaren Last an einer Luftschnittstelle zwischen dem Satz an Benutzergeräten und der Funkbasisstation (101) beinhaltet, wobei das Verfahren die folgenden Schritte umfasst:

Bestimmen einer Wahrscheinlichkeit auf Grundlage einer Anzahl an Benutzergeräten, n, in dem Satz an Benutzergeräten, einer Anzahl an Gewährungen, k, und einer Gewährungsnutzungswahrscheinlichkeit, P, für jedes der n Benutzergeräte (103), wobei die Wahrscheinlichkeit eine Wahrscheinlichkeit ist, dass die k Anzahl an Gewährungen genutzt wird, und wobei die Wahrscheinlichkeit durch eine Binominalverteilung gegeben ist:

$$b(k|n, P) = \frac{n!}{k!(n-k)!} P^k (1 - P)^{(n-k)};$$

Bestimmen einer maximal zulässigen Wahrscheinlichkeit an Überladung, (1-$P_{crit}$), für eine spezifizierte Anzahl an Benutzergeräten (103), n; und

Bestimmen einer Anzahl an geplanten Benutzergeräten, wobei die Anzahl an geplanten Benutzergeräten ein maximaler Wert von n ist, der $f_b(n_{crit}|n,P) \geq P_{crit}$ erfüllt, und wobei $n_{crit}$ eine Konstante ist, wobei **fb (k I n, P)** die entsprechende kumulative Verteilung der Binominalverteilung ist.

4. Verfahren nach Anspruch 3, wobei die Anzahl an geplanten Benutzergeräten in Relation zu einem gegebenen Risiko der Überladung der Luftschnittstelle bestimmt wird.

5. Verfahren nach einem der Ansprüche 3-4, wobei jedes der geplanten Benutzergeräte mit gleichen oder ungleichen Lastzuweisungen geplant wird.

6. Planer (109) zur Ablaufplanung von Aufwärtsstreckenübertragungen für einen Satz an Benutzergeräten an eine Funkbasisstation (101) in einem Funknetzwerk (100), wobei der Planer (109) ausgelegt ist, um die Aufwärtsstreckenübertragungen bis zu einem Grad über einer verfügbaren Last an einer Luftschnittstelle zwischen dem Satz an Benutzergeräten und der Funkbasisstation (101) zu überbuchen, wenn die Aufwärtsstreckenübertragungen geplant werden, wobei der Planer (109) für Folgendes ausgelegt ist:

Bestimmen einer Wahrscheinlichkeit auf Grundlage einer Anzahl an Benutzergeräten, n, in dem Satz an Benutzergeräten, einer Anzahl an Gewährungen, k, und einer Gewährungsnutzungswahrscheinlichkeit, P, für jedes der n Benutzergeräte (103), wobei die Wahrscheinlichkeit eine Wahrscheinlichkeit ist, dass die k Anzahl an Gewährungen genutzt wird, und wobei die Wahrscheinlichkeit durch eine Binominalverteilung gegeben ist:

$$b(k|n, P) = \frac{n!}{k!(n-k)!} P^k (1 - P)^{(n-k)};$$

Bestimmen einer maximal zulässigen Wahrscheinlichkeit an Überladung, (1-$P_{crit}$), für eine spezifizierte Anzahl an Benutzergeräten (103), n; und

Zuweisen einer Last, $L_{eq}$, an jedes aus der spezifizierten Anzahl an Benutzergeräten (103), n, wobei die Last,

$L_{eq}$, durch $L_{eq} = \frac{L_{avail}}{n_{crit}}$ gegeben ist, wobei $L_{avail}$ eine Last ist, die unter der spezifizierten Anzahl an Benutzergeräten (103), n, zu verteilen ist, und wobei $n_{crit}$ als ein Mindestwert von k definiert ist, für den die Ungleichheit $f_b(k|n,P) \geq P_{crit}$ gilt, wobei **fb (k I n, P)** die entsprechende kumulative Verteilung der Binominalverteilung ist.

7. Planer (109) nach Anspruch 6, wobei der Planer (109) ferner ausgelegt ist, um den Grad der Überbuchung in Relation zu einem gegebenen Risiko der Überladung der Luftschnittstelle festzulegen.

8. Planer (109) zur Ablaufplanung von Aufwärtsstreckenübertragungen für einen Satz an Benutzergeräten an eine Funkbasisstation (101) in einem Funknetzwerk (100), wobei der Planer (109) ausgelegt ist, um die Aufwärtsstreckenübertragungen bis zu einem Grad über einer verfügbaren Last an einer Luftschnittstelle zwischen dem Satz an Benutzergeräten und der Funkbasisstation (101) zu überbuchen, wenn die Aufwärtsstreckenübertragungen geplant werden, wobei der Planer (109) für Folgendes ausgelegt ist:

Bestimmen einer Wahrscheinlichkeit auf Grundlage einer Anzahl an Benutzergeräten, n, in dem Satz an Benutzergeräten, einer Anzahl an Gewährungen, k, und einer Gewährungsnutzungswahrscheinlichkeit, P, für jedes der n Benutzergeräte (103), wobei die Wahrscheinlichkeit eine Wahrscheinlichkeit ist, dass die k Anzahl an Gewährungen genutzt wird, und wobei die Wahrscheinlichkeit durch eine Binominalverteilung gegeben ist:

$$b(k|n, P) = \frac{n!}{k!(n-k)!} P^k (1 - P)^{(n-k)};$$

Bestimmen einer maximal zulässigen Wahrscheinlichkeit an Überladung, (1-$P_{crit}$), für eine spezifizierte Anzahl an Benutzergeräten (103), n; und

Bestimmen einer Anzahl an geplanten Benutzergeräten, wobei die Anzahl an geplanten Benutzergeräten ein maximaler Wert von n ist, der $f_b(n_{crit}|n,P) \geq P_{crit}$ erfüllt, und wobei $n_{crit}$ eine Konstante ist, wobei **fb (k I n, P)** die entsprechende kumulative Verteilung der Binominalverteilung ist.

9. Planer (109) nach Anspruch 8, wobei der Planer (109) ferner ausgelegt ist, um jedes der geplanten Benutzergeräte mit gleichen oder ungleichen Lastzuweisungen zu planen.

10. Knoten (101) eines Mobilfunksystems (100), wobei der Knoten (101) einen Planer (109) nach Anspruch 6 umfasst.

11. Knoten (101) nach Anspruch 10, wobei der Knoten (101) eine Funkbasisstation ist.

12. Knoten (101) eines Mobilfunksystems (100), wobei der Knoten (101) einen Planer (109) nach Anspruch 8 umfasst.

13. Knoten (101) nach Anspruch 12, wobei der Knoten (101) eine Funkbasisstation ist.

**Revendications**

1. Procédé de planification de transmissions de liaison montante pour un ensemble d'équipements utilisateur vers une station de base radio (101) dans un réseau radio (100), dans lequel la planification implique la surréservation (203) des transmissions de liaison montante jusqu'à un niveau supérieur à une charge disponible sur une interface radio entre l'ensemble d'équipements utilisateur et la station de base radio (101), le procédé comprenant les étapes :

de détermination d'une probabilité sur la base d'un nombre d'équipements utilisateur n, dans l'ensemble d'équipements utilisateur, d'un nombre d'attributions, k, et d'une probabilité d'utilisation d'attribution, P, pour chacun des équipements utilisateur n (103), dans lequel la probabilité est une probabilité que le nombre k d'attributions soit utilisé, et dans lequel la probabilité est donnée par une distribution binomiale :

$$b(k|n,P) = \frac{n!}{k!(n-k)!}P^k(1-P)^{(n-k)};$$

de détermination d'une probabilité de surcharge maximale admissible, $(1-P_{crit})$, pour un nombre spécifié d'équipements utilisateur (103), n ; et

d'attribution, à chacun du nombre spécifié d'équipements utilisateur (103), n, d'une charge, $L_{eq}$, dans lequel la

$$L_{eq} = \frac{L_{avail}}{n_{crit}}$$

charge, $L_{eq}$, est donnée par , dans lequel $L_{avail}$ est une charge qui doit être répartie parmi le nombre spécifié d'équipements utilisateur (103), n, et dans lequel $n_{crit}$ est défini comme une valeur minimale de k pour laquelle l'inégalité $f_b(k|n,P) \geq P_{crit}$ est vérifiée, dans lequel $f_b(k|n,P)$ est la distribution cumulative correspondante de la distribution binomiale.

2. Procédé selon la revendication 1, dans lequel le niveau de surréservation est fixé par rapport à un risque donné de la surcharge de l'interface radio.

3. Procédé de planification de transmissions de liaison montante pour un ensemble d'équipements utilisateur vers une station de base radio (101) dans un réseau radio (100), dans lequel la planification implique la surréservation (203) des transmissions de liaison montante jusqu'à un niveau supérieur à une charge disponible sur une interface radio entre l'ensemble d'équipements utilisateur et la station de base radio (101), le procédé comprenant les étapes de :

de détermination d'une probabilité sur la base d'un nombre d'équipements utilisateur, n, dans l'ensemble d'équipements utilisateur, d'un nombre d'attributions, k, et d'une probabilité d'utilisation d'attribution, P, pour chacun des équipements utilisateur n (103), dans lequel la probabilité est une probabilité que le nombre k d'attributions soit utilisé, et dans lequel la probabilité est donnée par une distribution binomiale :

$$b(k|n,P) = \frac{n!}{k!(n-k)!}P^k(1-P)^{(n-k)};$$

de détermination d'une probabilité de surcharge maximale admissible, $(1-P_{crit})$, pour un nombre spécifié d'équipements utilisateur (103), n ; et

de détermination d'un nombre d'équipements utilisateur planifiés, dans lequel le nombre d'équipements utilisateur planifiés est une valeur maximale de n qui satisfait $f_b(n_{crit}|n,P) \geq P_{crit}$, et dans lequel $n_{crit}$ est une constante, dans lequel $f_b(k|n,P)$ est la distribution cumulative correspondante de la distribution binomiale.

4. Procédé selon la revendication 3, dans lequel le nombre d'équipements utilisateur planifiés est déterminé en fonction d'un risque donné de la surcharge de l'interface radio.

5. Procédé selon l'une quelconque des revendications 3 et 4, dans lequel chacun des équipements utilisateur planifiés est planifié avec des attributions de charge égales ou inégales.

6. Planificateur (109) pour planifier des transmissions de liaison montante pour un ensemble d'équipements utilisateur vers une station de base radio (101) dans un réseau radio (100), le planificateur (109) étant conçu pour surréserver les transmissions de liaison montante jusqu'à un niveau supérieur à une charge disponible sur une interface radio entre l'ensemble d'équipements utilisateur et la station de base radio (101) lors de la planification des transmissions de liaison montante, le planificateur (109) étant adapté pour :

déterminer une probabilité sur la base d'un nombre d'équipements utilisateur n, dans l'ensemble d'équipements utilisateur, un nombre d'attributions, k, et une probabilité d'utilisation d'attribution, P, pour chacun des équipements utilisateur n (103), dans lequel la probabilité est une probabilité que le nombre k d'attributions soit utilisé, et dans lequel la probabilité est donnée par une distribution binomiale :

$$b(k|n,P) = \frac{n!}{k!(n-k)!} P^k (1-P)^{(n-k)};$$

déterminer une probabilité de surcharge maximale admissible, $(1-P_{crit})$, pour un nombre spécifié d'équipements utilisateur (103), n ; et

attribuer, à chacun du nombre spécifié d'équipements utilisateur (103), n, une charge, $L_{eq}$, dans lequel la charge,

$$L_{eq} = \frac{L_{avail}}{n_{crit}}$$

$L_{eq}$, est donnée par $\quad$ , dans lequel $L_{avail}$ est une charge qui doit être répartie parmi le nombre spécifié d'équipements utilisateur (103), n, et dans lequel $n_{crit}$ est défini comme une valeur minimale de k pour laquelle l'inégalité $f_b(k|n,P) \geq P_{crit}$ est vérifiée, dans lequel $f_b(k|n,P)$ est la distribution cumulative correspondante de la distribution binomiale.

7. Planificateur (109) selon la revendication 6, dans lequel le planificateur (109) est en outre adapté pour définir le niveau de surréservation en relation avec un risque donné de la surcharge de l'interface radio.

8. Planificateur (109) pour planifier des transmissions de liaison montante pour un ensemble d'équipements utilisateur vers une station de base radio (101) dans un réseau radio (100), dans lequel le planificateur (109)est conçu pour surréserver les transmissions de liaison montante jusqu'à un niveau supérieur à une charge disponible sur une interface radio entre l'ensemble d'équipements utilisateur et la station de base radio (101) lors de la planification des transmissions de liaison montante, le planificateur (109) étant adapté pour :

déterminer une probabilité sur la base d'un nombre d'équipements utilisateur, n, dans l'ensemble d'équipements utilisateur, un nombre d'attributions, k, et une probabilité d'utilisation d'attribution, P, pour chacun des équipements utilisateur n (103), dans lequel la probabilité est une probabilité que le nombre k d'attributions soit utilisé, et dans lequel la probabilité est donnée par une distribution binomiale :

$$b(k|n,P) = \frac{n!}{k!(n-k)!} P^k (1-P)^{(n-k)};$$

déterminer une probabilité de surcharge maximale admissible, $(1-P_{crit})$, pour un nombre spécifié d'équipements utilisateur (103), n ; et

déterminer un nombre d'équipements utilisateur planifiés, dans lequel le nombre d'équipements utilisateur planifiés est une valeur maximale de n qui satisfait $f_b(n_{crit}|n,P) \geq P_{crit}$, et dans lequel $n_{crit}$ est une constante, dans lequel $f_b(k|n,P)$ est la distribution cumulative correspondante de la distribution binomiale.

9. Planificateur (109) selon la revendication 8, dans lequel le planificateur (109) est en outre adapté pour planifier chacun des équipements utilisateur planifiés avec des attributions de charge égales ou inégales.

10. Noeud (101) d'un système radio cellulaire (100), dans lequel le noeud (101) comprend un planificateur (109) selon la revendication 6.

11. Noeud (101) selon la revendication 10, dans lequel le noeud (101) est une station de base radio.

12. Noeud (101) d'un système radio cellulaire (100), dans lequel le noeud (101) comprend un planificateur (109) selon la revendication 8.

13. Noeud (101) selon la revendication 12, dans lequel le noeud (101) est une station de base radio.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

P=0.1. overbooking ratio

Fig. 14a

P=0.2. overbooking ratio

Fig. 14b

Fig. 14c

Fig. 14d

P=0.5. overbooking ratio

Fig. 14e

P=0.6. overbooking ratio

Fig. 14f

P=0.7. overbooking ratio

Fig. 14g

P=0.8. overbooking ratio

Fig. 14h

```
┌─────────────────────────────┐
│ Decide set of UEs           │      201
│                             │
└─────────────────────────────┘
              │
              ▼
┌─────────────────────────────┐
│ Schedule with overbooking   │      203
│                             │
└─────────────────────────────┘
              │
              ▼
┌─────────────────────────────┐
│ Base overbooking on grant   │
│ utilization probabilities of│
│ the set of user equipments. │      205
│                             │
└─────────────────────────────┘
```

Fig. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004006603 A
- WO 03005751 A
- WO 2011071430 A

**Non-patent literature cited in the description**

- **E. DAHLMAN ; S. PARKVALL ; J. SKÖLD ; P. BEMING.** *3G Evolution - HSPA and LTE for Mobile Broadband,* 2007